# FASCICULE DE BREVET EUROPEEN

(11) **EP 2 655 494 B1**
(45) Date de publication et mention de la délivrance du brevet: **06.05.2015**
(21) Numéro de dépôt: 11808187.6
(22) Date de dépôt: 19.12.2011
(51) Int. Cl.: C08K 3/00, C08L 21/00, C08L 9/00

(54) **PNEUMATIQUE DONT LA BANDE DE ROULEMENT COMPORTE UN COPOLYMERE BLOC POLYURETHANE THERMOPLASTIQUE**
REIFEN MIT LAUFFLÄCHE AUS EINEM THERMOPLASTISCHEN POLYURETHANBLOCKCOPOLYMER
TYRE THE TREAD OF WHICH COMPRISES A THERMOPLASTIC POLYURETHANE BLOCK COPOLYMER

(30) Priorité: 23.12.2010 FR 1061110
(43) Date de publication de la demande: 30.10.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: LOPITAUX, Garance, 63040 Clermont-Ferrand Cedex 9 (FR)
(74) Mandataire: Ribière, Joel
(86) Numéro de dépôt international: PCT/EP2011/073278
(87) Numéro de publication internationale: WO 2013/041151

(56) Documents cités:
- WO-A1-02/088238
- WO-A1-2007/025690

## Description

La présente invention se rapporte aux compositions de caoutchoucs destinées notamment à la fabrication de pneumatiques ou de produits semi-finis pour pneumatiques ; elle est plus particulièrement relative aux compositions de caoutchouc utilisables dans les bandes de roulement de ces pneumatiques.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme humide.

Ces compromis de propriétés, en particulier du point de vue de la résistance au roulement et de la résistance à l'usure, ont pu être améliorés ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de charges inorganiques spécifiques qualifiées de renforçantes, notamment de silices hautement dispersibles dites "HDS" (*Highly Dispersible Silica*), capables de rivaliser, du point de vue du pouvoir renforçant, avec les noirs de carbone conventionnels de grade pneumatique.

L'amélioration des propriétés d'adhérence, particulièrement sur sol humide, reste cependant une préoccupation constante des concepteurs de pneumatiques.

Au cours de leurs recherches, les Demanderesses ont découvert une composition de caoutchouc comprenant notamment un élastomère thermoplastique spécifique qui, utilisée comme bande de roulement de pneumatique, permet d'améliorer l'adhérence des pneumatiques sur sol humide.

Ainsi, un premier objet de l'invention concerne un pneumatique comprenant une composition de caoutchouc comportant au moins :
- à titre de premier élastomère, un élastomère diénique ;
- à titre de second élastomère, un copolymère bloc polyuréthane thermoplastique à blocs polyuréthane et blocs polydiène ;
- 70 à 150 pce d'une charge inorganique renforçante ;
- un système plastifiant comprenant :
- selon un taux A compris entre 5 et 60 pce, une résine hydrocarbonée présentant une Tg supérieure à 20°C ;
- selon un taux B compris entre 5 et 60 pce, un plastifiant liquide à 20°C dont la Tg est inférieure à -20°C ;
- étant entendu que A+B est supérieur à 30 pce.

Les pneumatiques de l'invention sont particulièrement destinés à équiper des véhicules à moteur de type tourisme, incluant les véhicules 4x4 (à quatre roues motrices) et les véhicules SUV (*"Sport Utility Vehicles"*), des véhicules deux roues (notamment motos) comme de véhicules industriels choisis en particulier parmi camionnettes et "Poids-lourd" tels que bus, engins de transport routier tels que camions.

L'invention ainsi que ses avantages seront aisément compris à la lumière de la description et des exemples de réalisation qui suivent.

### I - DESCRIPTION DETAILLEE DE L'INVENTION

Dans la présente description, sauf indication expresse différente, tous les pourcentages (%) indiqués sont des pourcentages en masse.

L'abréviation "pce" (usuellement "*phr*" en anglais) signifie parties en poids pour cent parties d'élastomère ou caoutchouc (du total des élastomères si plusieurs élastomères sont présents).

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Toutes les valeurs de température de transition vitreuse « Tg » sont mesurées de manière connue par DSC (Differential Scanning Calorimetry) selon la norme ASTM D3418 (1999).

Le pneumatique de l'invention a donc pour caractéristique essentielle que sa bande de roulement comporte une composition de caoutchouc comprenant au moins un premier élastomère diénique, un taux particulièrement élevé de charge inorganique renforçante, un système plastifiant spécifique et, à titre de second élastomère, un copolymère bloc polyuréthane thermoplastique à blocs polyuréthane et blocs polydiène, composants qui vont être décrits en détail ci-après.

### I.1 - Elastomère diénique

La bande de roulement du pneumatique selon l'invention comporte une composition de caoutchouc qui a pour première caractéristique essentielle de comporter, à titre de premier élastomère, un élastomère diénique.

Par élastomère (ou « caoutchouc », les deux termes étant considérés comme synonymes) du type "diénique", on rappelle ici que doit être compris de manière connue un (on entend un ou plusieurs) élastomère issu au moins en partie (i.e., un homopolymère ou un copolymère) de monomères diènes (monomères porteurs de deux doubles liaisons carbone-carbone, conjuguées ou non).

L'élastomère diénique est choisi préférentiellement dans le groupe des élastomères diéniques (non thermoplastiques) constitué par les polybutadiènes (BR), les polyisoprènes (IR) de synthèse, le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Les copolymères peuvent contenir entre 99% et 20% en poids d'unités diéniques et entre 1% et 80% en poids d'unités vinylaromatique. Les élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés, et être préparés en dispersion ou en solution ; ils peuvent être couplés et/ou étoilés ou encore fonctionnalisés avec un agent de couplage et/ou d'étoilage ou de fonctionnalisation. Pour un couplage à la charge inorganique renforçante telle que silice, on peut citer par exemple des groupes fonctionnels silanol ou polysiloxane ayant une extrémité silanol (tels que décrits par exemple dans FR 2 740 778, US 6 013 718 et WO 2008/141702), des groupes alkoxysilane (tels que décrits par exemple dans FR 2 765 882 ou US 5 977 238), des groupes carboxyliques (tels que décrits par exemple dans WO 01/92402 ou US 6 815 473, WO 2004/096865 ou US 2006/0089445) ou encore des groupes polyéthers (tels que décrits par exemple dans EP 1 127 909, US 6 503 973, WO 2009/000750 et WO 2009/000752). Comme autres exemples d'élastomères fonctionnalisés, on peut citer également des élastomères (tels que SBR, BR, NR ou IR) du type époxydés.

Conviennent les polybutadiènes et en particulier ceux ayant une teneur (% molaire) en unités -1,2 comprise entre 4% et 80% ou ceux ayant une teneur (% molaire) en cis-1,4 supérieure à 80%, les polyisoprènes, les copolymères de butadiène-styrène et en particulier ceux ayant une Tg (température de transition vitreuse (Tg, mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%, les copolymères de butadiène-isoprène et notamment ceux ayant une teneur en isoprène comprise entre 5% et 90% en poids et une Tg de - 40°C à - 80°C, les copolymères isoprène-styrène et notamment ceux ayant une teneur en styrène comprise entre 5% et 50% en poids et une Tg comprise entre -5°C et - 50°C. Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%, et plus généralement tout copolymère butadiène-styrène-isoprène ayant une Tg comprise entre -5°C et -70°C.

Selon un autre mode particulier de réalisation, l'élastomère diénique est choisi dans le groupe constitué par les polybutadiènes, les copolymères de butadiène et les mélanges de ces élastomères. Plus préférentiellement, il s'agit d'un copolymère styrène-butadiène (SBR).

Selon un mode de réalisation particulier, la composition comporte de 50 à 100 pce d'un élastomère SBR, qu'il s'agisse d'un SBR préparé en émulsion ("ESBR") ou d'un SBR préparé en solution ("SSBR").

Selon d'autres modes de réalisation possibles, l'élastomère diénique est un coupage SBR/NR (ou SBR/IR), BR/NR (ou BR/IR), ou encore SBR/BR/NR (ou SBR/BR/IR).

Dans le cas d'un élastomère SBR (ESBR ou SSBR), on utilise notamment un SBR ayant une teneur en styrène moyenne, par exemple comprise entre 20% et 35% en poids, ou une teneur en styrène élevée, par exemple de 35 à 45%, une teneur en liaisons vinyliques de la partie butadiénique comprise entre 15% et 70%, une teneur (% molaire) en liaisons trans-1,4 comprise entre 15% et 75% et une Tg comprise entre - 10°C et - 55°C ; un tel SBR peut être avantageusement utilisé en mélange avec un BR possédant de préférence plus de 90% (% molaire) de liaisons cis-1,4.

Selon un autre mode de réalisation particulier, l'élastomère diénique est un élastomère isoprénique. Par "élastomère isoprénique", on entend de manière connue un homopolymère ou un copolymère d'isoprène, en d'autres termes un élastomère diénique choisi dans le groupe constitué par le caoutchouc naturel (NR) qui peut être plastifié ou peptisé, les polyisoprènes de synthèse (IR), les différents copolymères d'isoprène et les mélanges de ces élastomères. Parmi les copolymères d'isoprène, on citera en particulier les copolymères d'isobutène-isoprène (caoutchouc butyle - IIR), d'isoprène-styrène (SIR), d'isoprène-butadiène (BIR) ou d'isoprène-butadiène-styrène (SBIR). Cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un autre mode préférentiel de réalisation de l'invention, la composition de caoutchouc comprend un coupage d'un (un ou plusieurs) élastomère diénique dit "à haute Tg" présentant une Tg comprise entre - 70°C et 0°C et d'un (un ou plusieurs) élastomère diénique dit "à basse Tg" comprise entre -110°C et -80°C, plus préférentiellement entre -105°C et -90°C. L'élastomère à haute Tg est choisi de préférence dans le groupe constitué par les S-SBR, les E-SBR, le caoutchouc naturel, les polyisoprènes de synthèse (présentant un taux (% molaire) d'enchaînements cis-1,4 de préférence supérieur à 95%), les BIR, les SIR, les SBIR, et les mélanges de ces élastomères. L'élastomère à basse Tg comprend de préférence des unités butadiène selon un taux (% molaire) au moins égal à 70% ; il consiste de préférence en un polybutadiène (BR) présentant un taux (% molaire) d'enchaînements cis-1,4 supérieur à 90%.

Selon un autre mode particulier de réalisation de l'invention, la composition de caoutchouc comprend par exemple entre 30 et 90 pce, en particulier entre 40 et 90 pce, d'un élastomère à haute Tg en coupage avec un élastomère à basse Tg.

Selon un autre mode particulier de réalisation de l'invention, l'élastomère diénique de la composition selon l'invention comprend un coupage d'un BR (à titre d'élastomère basse Tg) présentant un taux (% molaire) d'enchaînements cis-1,4 supérieur à 90%, avec un ou plusieurs S-SBR ou E-SBR (à titre d'élastomère(s) haute Tg).

Les compositions de l'invention peuvent contenir un seul élastomère diénique ou un mélange de plusieurs élastomères diéniques.

### I.2 - Copolymère bloc polyuréthane thermoplastique

La composition de caoutchouc selon l'invention a pour autre caractéristique essentielle de comporter au moins, à titre de second élastomère (autre élastomère diénique différent du premier), un copolymère bloc polyuréthane thermoplastique à blocs polyuréthane et blocs polydiène ayant de préférence une teneur en blocs polydiène supérieure à 5 % en poids.

Les copolymères bloc polyuréthane thermoplastique (en abrégé TPU) sont bien connus, ils présentent une structure intermédiaire entre un polymère thermoplastique et un élastomère. Ils sont constitués de séquences rigides polyuréthane thermoplastiques reliées par des séquences souples élastomères polydiène, par exemple polybutadiène, polyisoprène. Leur synthèse est bien connue et expliquée par exemple dans le document WO 2007/025690, ainsi que leurs applications dans le domaine de la caoutchouterie, notamment dans les pneumatiques.

Les blocs polydiène sont préférentiellement choisis dans le groupe constitué par les blocs polybutadiène, les blocs polyisoprène, les blocs copolymères de butadiène, les blocs copolymères d'isoprène et les mélanges de ces blocs. Préférentiellement, les blocs polydiène sont des blocs polybutadiène.

La société Sartomer commercialise par exemple le produit « Poly Bd 2035 », un copolymère bloc polyuréthane thermoplastique, qui comporte notamment des blocs polybutadiène.

### 1.3 - Charge renforçante

La composition de la bande de roulement du pneumatique selon l'invention comporte une charge renforçante inorganique (telle que de la silice) dans une proportion de 70 à 150 pce, préférentiellement de 100 à 150 pce.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" par opposition au noir de carbone, capable de renforcer à elle seule, sans autre moyen qu'un agent de couplage intermédiaire, une composition de caoutchouc destinée à la fabrication de bandages pneumatiques, en d'autres termes apte à remplacer, dans sa fonction de renforcement, un noir de carbone conventionnel de grade pneumatique ; une telle charge se caractérise généralement, de manière connue, par la présence de groupes hydroxyle (-OH) à sa surface.

Comme charges inorganiques renforçantes conviennent notamment des charges minérales du type siliceuse, préférentiellement la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387. A titre de charge inorganique renforçante, on citera également les charges minérales du type alumineuse, en particulier de l'alumine (Al2O3) ou des (oxyde)hydroxydes d'aluminium, ou encore des oxydes de titane renforçants.

Selon un mode de réalisation préférentiel de l'invention, la charge inorganique renforçante comprend de 50 à 100% en masse de silice ; en d'autres termes, la silice représente 50 à 100% en masse de la charge inorganique renforçante.

L'homme du métier comprendra qu'à titre de charge équivalente de la charge inorganique renforçante décrite dans le présent paragraphe, pourrait être utilisée une charge renforçante d'une autre nature, notamment organique telle que du noir de carbone, dès lors que cette charge renforçante serait recouverte d'une couche inorganique telle que silice, ou bien comporterait à sa surface des sites fonctionnels, notamment hydroxyles, nécessitant l'utilisation d'un agent de couplage pour établir la liaison entre la charge et l'élastomère. A titre d'exemple, on peut citer par exemple des noirs de carbone pour pneumatiques tels que décrits par exemple dans les documents brevet WO 96/37547, WO 99/28380.

Le taux de charge inorganique renforçante, en particulier dé silice, est de préférence supérieur à 70 pce et inférieur à 150 pce, plus préférentiellement compris de 100 à 150 pce.

Selon un mode de réalisation avantageux, la composition de la bande de roulement peut comporter du noir de carbone. Le noir de carbone, lorsqu'il est présent, est utilisé de préférence à un taux inférieur à 20 pce, plus préférentiellement inférieur à 10 pce (par exemple entre 0,5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances apportées par la charge inorganique renforçante:

Pour coupler la charge inorganique renforçante à l'élastomère diénique, on utilise de manière bien connue un agent de couplage (ou agent de liaison) destiné à assurer une connexion suffisante, de nature chimique et/ou physique, entre la charge inorganique (surface de ses particules) et l'élastomère diénique. Cet agent de couplage est au moins bifonctionnel. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - Sₓ - A - Z , dans laquelle:

- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 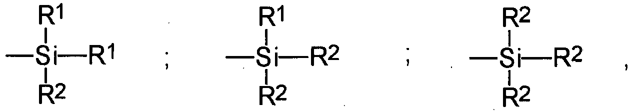 dans lesquelles:
   - les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
   - les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂. On citera également à titre d'exemples préférentiels les polysulfures (notamment disulfures, trisulfures ou tétrasulfures) de bis-(monoalkoxyl(C₁-C₄)-dialkyl(C₁-C₄)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane (R² = OH dans la formule I ci-dessus) tels que décrits par exemple dans les demandes de brevet WO 02/30939 (ou US 6 774 255), WO 02/31041 (ou US 2004/051210), et WO2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080, WO 2008/055986, WO 2010/072685.

Bien entendu pourraient être également utilisés des mélanges des agents de couplage précédemment décrits, comme décrit notamment dans la demande WO 2006/125534 précitée.

La teneur en agent de couplage est préférentiellement comprise entre 2 et 20 pce, plus préférentiellement entre 3 et 15 pce.

### 1.4 - Système plastifiant

La composition de la bande de roulement du pneumatique selon l'invention a pour autre caractéristique essentielle de comporter un système plastifiant comprenant :
- selon un taux A compris entre 5 et 60 pce, une résine hydrocarbonée présentant une Tg supérieure à 20°C ;
- selon un taux B compris entre 5 et 60 pce, un plastifiant liquide à 20°C dont la Tg est inférieure à -20°C ;
- étant entendu que A+B est supérieur à 30 pce.

Préférentiellement le taux global de système plastifiant A + B est supérieur à 40 pce, plus préférentiellement il est compris dans un domaine de 50 à 100 pce, encore plus préférentiellement de 50 à 80 pce.

Le plastifiant liquide est liquide à 20 °C, il est dit à « basse Tg », c'est-à-dire qu'il présente par définition une Tg inférieure à -20 °C, de préférence inférieure à -40 °C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (20°C), ces plastifiants ou ces huiles, plus ou moins visqueux, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les agents plastifiants liquides choisis dans le groupe constitué par les polymères diéniques liquides, les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extracts*), les huiles TRAE (*Treated Residual Aromatic Extract*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus préférentiel, l'agent plastifiant liquide est choisi dans le groupe constitué par les huiles MES, les huiles TDAE, les huiles naphténiques, les huiles végétales et les mélanges de ces huiles.

Selon un mode de réalisation préférentiel de l'invention, le plastifiant liquide, notamment huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huile de pétrole les huiles RAE, les huiles TRAE et les huiles SRAE ou les mélanges de ces huiles, qui contiennent de faibles teneurs en composés polycycliques.

Selon un autre mode de réalisation particulier, le plastifiant liquide est un dérivé terpénique ; à titre d'exemple peut être cité notamment le produit « Dimarone » de Yasuhara.

Conviennent également les polymères liquides issus de la polymérisation d'oléfines ou de diènes, comme par exemple ceux choisis dans le groupe constitué par les polybutènes, les polydiènes, en particulier les polybutadiènes, les polyisoprènes, les copolymères de butadiène et d'isoprène, les copolymères de butadiène ou d'isoprène et de styrène, et les mélanges de ces polymères liquides. La masse molaire moyenne en nombre de tels polymères liquides est préférentiellement comprise dans un domaine allant de 500 g/mol à 50 000 g/mol, plus préférentiellement de 1000 g/mol à 10 000 g/mol. A titre d'exemple peuvent être cités notamment les produits « Ricon » de la société Sartomer.

Selon un autre mode de réalisation préférentiel de l'invention, le plastifiant liquide est une huile végétale. A titre préférentiel est utilisée une huile choisie dans le groupe constituée par les huiles de lin, carthame, soja, maïs, coton, navette, ricin, abrasin, pin, tournesol, palme, olive, noix de coco, arachide, pépin de raisin, et les mélanges de ces huiles, en particulier une huile de tournesol. Cette huile végétale, particulièrement huile de tournesol, est plus préférentiellement une huile riche en acide oléique, c'est-à-dire que l'acide gras (ou l'ensemble des acides gras si plusieurs sont présents) dont elle dérive comporte de l'acide oléique selon une fraction massique au moins égale à 60%, plus préférentiellement au moins égale à 70%, en particulier égale ou supérieure à 80%.

Selon un autre mode de réalisation particulier de l'invention, le plastifiant liquide est un éther ; peuvent être cités par exemple les polyéthylène glycols ou les polypropylène glycols.

Conviennent également les plastifiants liquides choisis dans le groupe constitué par les plastifiants esters, les plastifiants phosphates, les plastifiants sulfonates et les mélanges de ces composés. Conviennent notamment les triesters choisis dans le groupe constitué par les triesters d'acide carboxylique, d'acide phosphorique, d'acide sulfonique et les mélanges de ces triesters. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters, on peut citer en particulier les triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides; plus préférentiellement, qu'il soit d'origine synthétique ou naturelle, l'acide gras utilisé est constitué pour plus de 60%, plus préférentiellement encore pour plus de 70% en poids d'acide oléique ; de tels triesters (trioléates) à fort taux d'acide oléique, d'origine naturelle ou de synthèse, sont bien connus, ils ont été décrits par exemple dans la demande WO 02/088238, à titre d'agents plastifiants dans des bandes de roulement pour pneumatiques. A titre de plastifiants phosphates, on peut citer par exemple ceux qui contiennent entre 12 et 30 atomes de carbone, par exemple le trioctyle phosphate.

La résine hydrocarbonée présente une Tg supérieure à 20°C.

La dénomination "résine" est réservée dans la présente demande, par définition, à un composé qui est solide à température ambiante (20°C), par opposition à un agent plastifiant liquide tel qu'une huile.

Les résines hydrocarbonées sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods*"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 30°C, notamment comprise entre 30°C et 95°C.

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*). La température de ramollissement d'une résine hydrocarbonée est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après.

Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes : solvant d'élution : le tétrahydrofurane ; température 35°C ; concentration 1 g/litre ; débit :1 ml/min ; volume injecté : 100 µl ; étalonnage de Moore avec des étalons de polystyrène ; jeu de 3 colonnes "Waters" en série ("Styragel HR4E", "Styragel HR1" et "Styragel HR 0.5") ; détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn). Toutes les valeurs de masses molaires indiquées dans la présente demande sont donc relatives à des courbes d'étalonnages réalisées avec des étalons de polystyrène.

Selon un mode de réalisation préférentiel de l'invention, la résine hydrocarbonée présente au moins une quelconque, plus préférentiellement l'ensemble des caractéristiques suivantes :
- une Tg supérieure à 20°C (en particulier compris entre 30°C et 100°C), plus préférentiellement supérieure à 30°C (en particulier entre 30 C et 95°C);
- un point de ramollissement supérieur à 50°C (en particulier compris entre 50°C et 150°C) ;
- une masse molaire moyenne en nombre (Mn) comprise entre 400 et 2000 g/mol, préférentiellement entre 500 et 1500 g/mol ;
- un indice de polymolécularité (Ip) inférieur à 3, préférentiellement à 2 (rappel : Ip = Mw/Mn avec Mw masse molaire moyenne en poids).

A titres d'exemples de telles résines hydrocarbonées, on peut citer celles choisies dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus, on peut citer plus particulièrement celles choisies dans le groupe constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

### 1.5 - Additifs divers

Les compositions de caoutchouc des bandes de roulement des pneumatiques conformes à l'invention comportent également tout ou partie des additifs usuels habituellement utilisés dans les compositions d'élastomères destinées à la fabrication de bandes de roulement, comme par exemple des pigments, des agents de protection tels que cires anti-ozone, anti-ozonants chimiques, anti-oxydants, des agents anti-fatigue, des résines renforçantes, des accepteurs (par exemple résine phénolique novolaque) ou des donneurs de méthylène (par exemple HMT ou H3M), un système de réticulation à base soit de soufre, soit de donneurs de soufre et/ou de peroxyde et/ou de bismaléimides, des accélérateurs de vulcanisation, des activateurs de vulcanisation.

Ces compositions peuvent également contenir, en complément des agents de couplage, des activateurs de couplage, des agents de recouvrement des charges inorganiques ou plus généralement des agents d'aide à la mise en oeuvre susceptibles de manière connue, grâce à une amélioration de la dispersion de la charge dans la matrice de caoutchouc et à un abaissement de la viscosité des compositions, d'améliorer leur faculté de mise en oeuvre à l'état cru, ces agents étant par exemple des silanes hydrolysables tels que des alkylalkoxysilanes, des polyols, des polyéthers, des amines primaires, secondaires ou tertiaires, des polyorganosiloxanes hydroxylés ou hydrolysables.

### 1.6 - Préparation des compositions de caoutchouc

Les compositions utilisées dans les bandes de roulement des pneumatiques de l'invention peuvent être fabriquées dans des mélangeurs appropriés, en utilisant deux phases de préparation successives bien connues de l'homme du métier : une première phase de travail ou malaxage thermomécanique (phase dite "non-productive") à haute température, jusqu'à une température maximale comprise entre 110°C et 190°C, de préférence entre 130°C et 180°C, suivie d'une seconde phase de travail mécanique (phase dite "productive") jusqu'à une plus basse température, typiquement inférieure à 110°C, par exemple entre 40°C et 100°C, phase de finition au cours de laquelle est incorporé le système de réticulation.

Le procédé pour préparer de telles compositions comporte par exemple les étapes suivantes :
- malaxer thermomécaniquement (par exemple en une ou plusieurs fois) le ou les élastomères diéniques avec la charge inorganique renforçante, l'agent de couplage, le cas échéant le noir de carbone, le système plastifiant et le copolymère bloc polyuréthane thermoplastique à blocs polyuréthane et à blocs polydiène, jusqu'à atteindre une température maximale comprise entre 110°C et 190°C (phase dite « non-productive ») ;
- refroidir l'ensemble à une température inférieure à 100°C ;
- incorporer ensuite, au cours d'une seconde étape (dite « productive »), un système de réticulation ;
- malaxer le tout jusqu'à une température maximale inférieure à 110°C.

A titre d'exemple, la phase non-productive est conduite en une seule étape thermomécanique au cours de laquelle on introduit, dans un mélangeur approprié tel qu'un mélangeur interne usuel, dans un premier temps tous les constituants de base (le ou les élastomères diéniques, le système plastifiant, la charge inorganique renforçante, l'agent de couplage et le copolymère bloc polyuréthane thermoplastique à blocs polyuréthane et à blocs polydiène), puis dans un deuxième temps, par exemple après une à deux minutes de malaxage, les autres additifs, éventuels agents de recouvrement de la charge ou de mise en oeuvre complémentaires, à l'exception du système de réticulation. La durée totale du malaxage, dans cette phase non-productive, est de préférence comprise entre 1 et 15 min.

Après refroidissement du mélange ainsi obtenu, on incorpore alors dans un mélangeur externe tel qu'un mélangeur à cylindres, maintenu à basse température (par exemple entre 40°C et 100°C), le système de réticulation. L'ensemble est alors mélangé (phase productive) pendant quelques minutes, par exemple entre 2 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 3,0 pce, celui de l'accélérateur primaire est de préférence compris entre 0,5 et 5,0 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

La composition finale ainsi obtenue peut ensuite être calandrée, par exemple sous la forme d'une feuille, d'une plaque notamment pour une caractérisation au laboratoire, ou encore extrudée, par exemple pour former un profilé de caoutchouc utilisé pour la fabrication d'une bande de roulement.

L'invention concerne les pneumatiques précédemment décrits tant à l'état cru (c'est à dire, avant cuisson) qu'à l'état cuit (c'est à dire, après réticulation ou vulcanisation).

### II -EXEMPLES DE REALISATION DE L'INVENTION

### II.1 - Préparation des compositions

On procède pour les essais qui suivent de la manière suivante : on introduit dans un mélangeur interne (taux de remplissage final : environ 70% en volume), dont la température initiale de cuve est d'environ 60 °C, successivement les élastomères, la silice, l'agent de couplage, les plastifiants ainsi que les divers autres ingrédients à l'exception du système de vulcanisation. On conduit alors un travail thermomécanique (phase non-productive) en une étape, qui dure au total environ 3 à 4 min, jusqu'à atteindre une température maximale de « tombée » de 165°C. On récupère le mélange ainsi obtenu, on le refroidit puis on incorpore du soufre et un accélérateur type sulfénamide sur un mélangeur (homo-finisseur) à 30 °C, en mélangeant le tout (phase productive) pendant un temps approprié (par exemple entre 5 et 12 min).

Les compositions sont finalement extrudées sous la forme d'une bande de roulement de pneumatique tourisme, pour être testées comme indiqué dans le paragraphe qui suit.

### II.2 - Essais

Les essais qui suivent démontrent l'amélioration de l'adhérence sur sol humide d'une composition de bande de roulement de pneumatique selon l'invention, par rapport à une composition conventionnelle.

Pour cela, deux compositions de caoutchouc pour bande de roulement ont été préparées comme indiqué précédemment, une conformément à l'invention (notée ci-après C.2) et une non conformément à l'invention (composition témoin notée ci-après C.1).

Leurs formulations sont présentées dans le tableau 1 annexé.

La composition C.1 est une composition témoin, à base de SBR solution, utilisable dans des bandes de roulement conventionnelles de « Pneus Verts » pour véhicules de tourisme.

La composition C.2 diffère de la composition témoin C.1 uniquement par le remplacement de 20 pce de SBR par 20 pce d'un copolymère bloc polyuréthane thermoplastique. Les deux compositions se caractérisent en outre par des taux élevés de charge renforçante et de système plastifiant. Le système plastifiant global est un mélange d'une résine hydrocarbonée (résine polylimonène) et d'un plastifiant liquide (une huile végétale de tournesol et une huile d'extension MES du SBR).

Les bandes de roulement de pneumatiques comportant respectivement les compositions C.1 et C.2 sont caractérisées, après cuisson, par un test d'adhérence transversale sur sol humide. Les pneumatiques sont montés, à l'avant et à l'arrière, sous pression de gonflage nominale, sur un véhicule automobile de marque « SEAT », modèle « LEON », équipé d'un système ABS.

Le test consiste à mesurer le temps minimal nécessaire au véhicule pour parcourir un circuit fortement virageux et arrosé de manière à maintenir le sol humide, sous des conditions de vitesse limite (maximale). Une valeur inférieure à celle du témoin, indique un résultat amélioré c'est-à-dire un temps de parcours plus court.

On constate de manière surprenante que les pneumatiques de l'invention permettent d'améliorer de manière sensible la performance d'adhérence sur sol humide, avec un temps de parcours réduit de 2,2 % (soit environ 2,2 secondes de moins pour un tour de circuit durant environ 100 secondes) par rapport aux pneumatiques témoins, ce qui est significatif pour l'homme du métier.

En conclusion, les résultats de ces essais démontrent que l'utilisation d'un copolymère bloc polyuréthane thermoplastique à blocs polyuréthane et blocs polydiène, notamment en présence de taux de charges et de plastifiants élevés, dans la composition de la bande de roulement du pneumatique selon l'invention, permet d'obtenir des pneumatiques présentant une adhérence sur sol humide améliorée.

**Tableau 1**

| Composition n° | C.1 | C.2 |
|---|---|---|
| SBR (1) | 100 | 80 |
| TPU (2) | - | 20 |
| Charge inorganique (3) | 110 | 110 |
| Noir de carbone (4) | 4 | 4 |
| Résine (5) | 25 | 25 |
| Plastifiant liquide (6) | 30 | 30 |
| Anti-oxydant (7) | 2 | 2 |
| Cire anti-ozone | 1.5 | 1.5 |
| Agent de couplage (8) | 8.8 | 8.8 |
| Acide stéarique(9) | 2 | 2 |
| ZnO (10) | 1.8 | 1.8 |
| DPG (11) | 2.0 | 2.0 |
| CBS (12) | 2.0 | 2.0 |
| Soufre | 1.3 | 1.3 |

| | | |
|---|---|---|
| (1) SBR (taux exprimé en SBR sec) avec 40% de styrène, 23% de motifs butadiène 1-2 ; (2) Copolymère bloc polyuréthane (« Poly Bd 2035 » de la société Sartomer) ; (3) Silice (« Ultrasil 7000 GR » de la société Degussa) ; (4) Noir de carbone N234 ; (5) Résine polylimonène (« Dercolyte L120 » de la société DRT) ; (6) Mélange d'huile végétale de tournesol oléique («Lubrirob Tod 1880» de la société Novance), et d'huile d'extension MES du SBR (« Catenex SNR » de la société Shell) ; (7) N-1,3-diméthylbutyl-N-phénylparaphénylènediamine (« Santoflex 6-PPD » de la société Flexsys) ; (8) Silane TESPT (« SI69 » de la société Degussa) ; (9) stéarine ("Pristerene" de la société Uniquema) ; (10) oxyde de zinc (grade industriel - société Umicore) ; (11) DPG = Diphénylguanidine (« Perkacit DPG » de la société Flexsys) ; (12) N-cyclohexyl-2-benzothiazyl-sulfénamide (« Santocure CBS » de la société Flexsys). | | |

## Revendications

1. - Pneumatique dont la bande de roulement comprend une composition de caoutchouc comportant au moins :
- à titre de premier élastomère, un élastomère diénique ;
- à titre de second élastomère, un copolymère bloc polyuréthane thermoplastique à blocs polyuréthane et blocs polydiène ;
- 70 à 150 pce d'une charge inorganique renforçante ;
- un système plastifiant comprenant :
- selon un taux A compris entre 5 et 60 pce, une résine hydrocarbonée présentant une Tg supérieure à 20°C ;
- selon un taux B compris entre 5 et 60 pce, un plastifiant liquide à 20°C dont la Tg est inférieure à -20°C ;
- étant entendu que A+B est supérieur à 30 pce.

2. - Pneumatique selon la revendication 1, dans lequel le premier élastomère est choisi dans le groupe constitué par les polybutadiènes (BR), les polyisoprènes (IR) de synthèse, le caoutchouc naturel (NR), les copolymères de butadiène, les copolymères d'isoprène et les mélanges de ces élastomères.

3. - Pneumatique selon la revendication 2, dans lequel le premier élastomère est choisi dans le groupe constitué par les polybutadiènes, les copolymères de butadiène et les mélanges de ces élastomères.

4. - Pneumatique selon la revendication 3, dans lequel le premier élastomère est un copolymère styrène-butadiène.

5. - Pneumatique selon la revendication 4, dans lequel le taux de charge inorganique renforçante est compris dans un domaine de 100 à 150 pce.

6. - Pneumatique selon l'une quelconque des revendications 1 à 5, dans lequel les blocs polydiène du second élastomère sont choisis dans le groupe constitué par les blocs polybutadiène, les blocs polyisoprène, les blocs copolymères de butadiène, les blocs copolymères d'isoprène et les mélanges de ces blocs.

7. - Pneumatique selon la revendication 6, dans lequel les blocs polydiène sont des blocs polybutadiène.

8. - Pneumatique selon l'une quelconque des revendications 1 à 7, dans lequel la teneur en blocs polydiène est supérieure à 5 % en poids.

9. - Pneumatique selon l'une quelconque des revendications 1 à 8, dans lequel A+B est supérieur à 40 pce.

10. - Pneumatique selon l'une quelconque des revendications 1 à 9, dans lequel A+B est compris dans un domaine de 50 à 100 pce.

11. - Pneumatique selon l'une quelconque des revendications 1 à 10, dans lequel la résine hydrocarbonée thermoplastique est choisie dans le groupe constitué par les résines d'homopolymères ou copolymères de cyclopentadiène ou dicyclopentadiène, les résines d'homopolymères ou copolymères de terpène, les résines d'homopolymères ou copolymères de coupe C5, les résines d'homopolymères ou copolymères de coupe C9, les résines d'homopolymères ou copolymères d'alpha-méthyl-styrène et les mélanges de ces résines.

12. - Pneumatique selon l'une quelconque des revendications 1 à 11, dans lequel le plastifiant liquide est choisi dans le groupe constitué par les polymères diéniques liquides, les huiles polyoléfines, les huiles naphténiques, les huiles paraffiniques, les huiles DAE, les huiles MES, les huiles TDAE, les huiles RAE, les huiles TRAE, les huiles SRAE, les huiles minérales, les huiles végétales, les plastifiants éthers, les plastifiants esters, les plastifiants phosphates, les plastifiants sulfonates et les mélanges de ces composés.

13. - Pneumatique selon la revendication 12, dans lequel l'agent plastifiant liquide est choisi dans le groupe constitué par les huiles MES, les huiles TDAE, les huiles naphténiques, les huiles végétales et les mélanges de ces huiles.

14. - Pneumatique selon l'une quelconque des revendications 1 à 13, dans lequel la charge inorganique renforçante comporte de la silice.

## Patentansprüche

1. Reifen, dessen Lauffläche eine Kautschukzusammensetzung umfasst, welche mindestens:
- als erstes Elastomer ein Dienelastomer,
- als zweites Elastomer ein thermoplastisches Polyurethanblockcopolymer mit Polyurethanblöcken und Polydienblöcken;
- 70 bis 150 phe eines verstärkenden anorganischen Füllstoffs;
- ein Weichmachersystem, umfassend
- gemäß einem Gehalt A zwischen 5 und 60 phe, ein Kohlenwasserstoffharz mit einer Tg von mehr als 20°C;
- gemäß einem Gehalt B zwischen 5 und 60 phe, einen bei 20°C flüssigen Weichmacher mit einer Tg von weniger als -20°C;
- mit der Maßgabe, dass A+B mehr als 30 phe beträgt;
umfasst.

2. Reifen nach Anspruch 1, wobei das erste Elastomer aus der Gruppe bestehend aus Polybutadienen (BR), synthetischen Polyisoprenen (IR), Naturkautschuk (NR), Butadien-Copolymeren, Isopren-Copolymeren und Mischungen dieser Elastomere ausgewählt ist.

3. Reifen nach Anspruch 2, wobei das erste Elastomer aus der Gruppe bestehend aus Polybutadienen, Butadien-Copolymeren und Mischungen dieser Elastomere ausgewählt ist.

4. Reifen nach Anspruch 3, wobei es sich bei dem ersten Elastomer um ein Styrol-Butadien-Copolymer (SBR) handelt.

5. Reifen nach Anspruch 4, wobei der Gehalt an verstärkendem anorganischem Füllstoff 100 bis 150 phe beträgt.

6. Reifen nach einem der Ansprüche 1 bis 5, wobei die Polydienblöcke des zweiten Elastomers aus der Gruppe bestehend aus Polybutadienblöcken, Polyisoprenblöcken, Butadiencopolymerblöcken, Isoprencopolymerblöcken und Mischungen dieser Blöcke ausgewählt sind.

7. Reifen nach Anspruch 6, wobei es sich bei den Polydienblöcken um Polybutadienblöcke handelt.

8. Reifen nach einem der Ansprüche 1 bis 7, wobei der Gehalt an Polydienblöcken mehr als 5 Gew.-% beträgt.

9. Reifen nach einem der Ansprüche 1 bis 8, wobei A+B mehr als 40 phe beträgt.

10. Reifen nach einem der Ansprüche 1 bis 9, wobei A+B in einem Bereich von 50 bis 100 phe liegt.

11. Reifen nach einem der Ansprüche 1 bis 10, wobei das thermoplastische Kohlenwasserstoffharz aus der Gruppe bestehend aus Homopolymer- oder Copolymerharzen von Cyclopentadien oder Dicyclopentadien, Terpen-Homopolymer- oder -Copolymerharzen, C5-Schnitt-Homopolymer- oder -Copolymerharzen, C9-Schnitt-Homopolymer- oder -Copolymerharzen, Homopolymer- oder Copolymerharzen von alpha-Methylstyrol und Mischungen dieser Harze ausgewählt ist.

12. Reifen nach einem der Ansprüche 1 bis 11, wobei der flüssige Weichmacher aus der Gruppe bestehend aus flüssigen Dienpolymeren, Polyolefinölen, naphthenischen Ölen, Paraffinölen, DAE-Ölen, MES-Ölen, TDAE-Ölen, RAE-Ölen, TRAE-Ölen, SRAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

13. Reifen nach Anspruch 12, wobei der flüssige Weichmacher aus der Gruppe bestehend aus MES-Ölen, TDAE-Ölen, naphthenischen Ölen, Pflanzenölen und Mischungen dieser Öle ausgewählt ist.

14. Reifen nach einem der Ansprüche 1 bis 13, wobei der verstärkende anorganische Füllstoff Kieselsäure umfasst.

## Claims

1. Tyre, the tread of which comprises a rubber composition comprising at least:
- as first elastomer, a diene elastomer;
- as second elastomer, a thermoplastic polyurethane block copolymer having polyurethane blocks and polydiene blocks;
- from 70 to 150 phr of a reinforcing inorganic filler;
- a plasticizing system comprising:
- according to a content A of between 5 and 60 phr, a hydrocarbon resin exhibiting a Tg of greater than 20°C;
- according to a content B of between 5 and 60 phr, a plasticizer which is liquid at 20°C, the Tg of which is less than -20°C;
- it being understood that A+B is greater than 30 phr.

2. Tyre according to Claim 1, in which the first elastomer is selected from the group consisting of polybutadienes (BRs), synthetic polyisoprenes (IRs), natural rubber (NR), butadiene copolymers, isoprene copolymers and the mixtures of these elastomers.

3. Tyre according to Claim 2, in which the first elastomer is selected from the group consisting of polybutadienes, butadiene copolymers and the mixtures of these elastomers.

4. Tyre according to Claim 3, in which the first elastomer is a styrene/butadiene copolymer.

5. Tyre according to Claim 4, in which the content of reinforcing inorganic filler is within a range from 100 to 150 phr.

6. Tyre according to any one of Claims 1 to 5, in which the polydiene blocks of the second elastomer are selected from the group consisting of polybutadiene blocks, polyisoprene blocks, butadiene copolymer blocks, isoprene copolymer blocks and the mixtures of these blocks.

7. Tyre according to Claim 6, in which the polydiene blocks are polybutadiene blocks.

8. Tyre according to any one of Claims 1 to 7, in which the content of polydiene blocks is greater than 5% by weight.

9. Tyre according to any one of Claims 1 to 8, in which A+B is greater than 40 phr.

10. Tyre according to any one of Claims 1 to 9, in which A+B is within a range from 50 to 100 phr.

11. Tyre according to any one of Claims 1 to 10, in which the thermoplastic hydrocarbon resin is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, α-methylstyrene homopolymer or copolymer resins and the mixtures of these resins.

12. Tyre according to any one of Claims 1 to 11, in which the liquid plasticizer is selected from the group consisting of liquid diene polymers, polyolefin oils, naphthenic oils, paraffinic oils, DAE oils, MES oils, TDAE oils, RAE oils, TRAE oils, SRAE oils, mineral oils, vegetable oils, ether plasticizers, ester plasticizers, phosphate plasticizers, sulphonate plasticizers and the mixtures of these compounds.

13. Tyre according to Claim 12, in which the liquid plasticizing agent is selected from the group consisting of MES oils, TDAE oils, naphthenic oils, vegetable oils and the mixtures of these oils.

14. Tyre according to any one of Claims 1 to 13, in which the reinforcing inorganic filler comprises silica.
